(19) Europäisches Patentamt
European Patent Office
Office européen des brevets

(11) Publication number: **0 132 900**
**B1**

(12) # EUROPEAN PATENT SPECIFICATION

(45) Date of publication of patent specification: **24.08.88**

(51) Int. Cl.$^4$: **A 01 N 25/00,** A 01 N 61/00, C 05 G 3/00

(21) Application number: **84300662.8**

(22) Date of filing: **02.02.84**

(54) **Process for identifying a location to which a substance has been applied.**

(30) Priority: **07.02.83 US 464664**

(43) Date of publication of application:
**13.02.85 Bulletin 85/07**

(45) Publication of the grant of the patent:
**24.08.88 Bulletin 88/34**

(84) Designated Contracting States:
**AT BE CH DE FR GB IT LI LU NL SE**

(56) References cited:
**EP-A-0 072 621**
**DE-A-2 511 077**
**US-A-1 947 320**
**US-A-4 167 510**

(73) Proprietor: **MILLIKEN RESEARCH CORPORATION**
**Iron Ore Road**
**Spartanburg South Carolina 29304 (US)**

(72) Inventor: **Brendle, Ralph Noble**
**Route 8 Grouse Lane**
**Spartanburg South Carolina 29303 (US)**

(74) Representative: **Perry, Robert Edward et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 132 900 B1

**Description**

The present invention relates to a location process, i.e. for identifying a location to which a substance has been applied.

Frequently, factors such as the nature of the substance and/or the size and configuration of the location make it difficult to determine, during application, where the substance has been applied and where it has not been applied. For instance, where a substance such as a fertiliser or pesticide is applied to a land area, e.g. farmland, golf course, right-of-way or woodland, the appearance of the areas which have been treated may not be sufficiently different from that of the surrounding or neighbouring non-treated areas for it to be possible for an operator to avoid overlapping application (which may be costly or even damaging) or failure to treat.

Solutions to the problem which have been suggested have included the incorporation of certain non-fugitive or permanent dyes in the substance to be applied, to identify the location to which the substance has been applied. In particular, it has been suggested to incorporate certain non-fugitive or permanent dyes in pesticide compositions, such as insecticides, fungicides and herbicides, to identify the location to which the pesticide has been applied and to distinguish it from locations which it is intended should be treated.

Unfortunately, there are numerous problems associated with such compositions containing permanent dyes. For instance, the dyes may be toxic or they may be incompatible with one or more ingredients of the composition. They may cause staining of workers' hands and clothing. Equipment may become stained. The permanent dyes which have been used are, typically, non-biodegradeable and are therefore subject to environmental objections. Further, and perhaps most importantly, it may be difficult to achieve a colour which is aesthetically acceptable, having regard to the nature of the area being treated.

Alkyleneoxy-substituted fugitive colourants are known. They are used to colour code textiles during production and/or finishing operations, in order to identify certain synthetic or natural fibres. Such fugitive colourants may be water-fugitive and/or solvent-fugitive. Colourants containing one or more polyethyleneoxy groups are generally considered water-fugitive; colourants containing one or more propyleneoxy groups are generally considered solvent-fugitive.

Known fugitive colourants include the polyethylene oxide colourants described in US—A—3157633. Such colourants are a combination of a dyestuff radical and one or more polyethyleneoxy groups. Dyestuff radicals which are disclosed include nitroso, nitro, azo, diphenylmethane, triphenylmethane, xanthene, acridene, methine, thiazole, indamine, azine, oxazine and anthraquinone radicals. The radical is preferably attached to the polymeric constituent of the colourant composition by an amino nitrogen.

US—A—3927044 discloses alkaline-stable fugitive colourants of the triphenylmethane type.

US—A—4167510 discloses ester-capped alkyleneoxy fugitive colourants. These colourants comprise an organic dyestuff molecule having capped $C_{2-4}$ alkyleneoxy units, the total number of alkyleneoxy capped units in the molecule being from 2 to 300. These can be made water and/or organic solvent-soluble, depending upon the particular capping moiety employed, the presence or absence of ionic groups, and the total number of alkyleneoxy units in the colourant molecule. The solubility, and thus the fugitivity, of the colourants may be achieved irrespective of whether the relatively large dyestuff molecule is hydrophobic or hydrophilic.

EP—A—0072621 discloses fugitive colourants having the formula

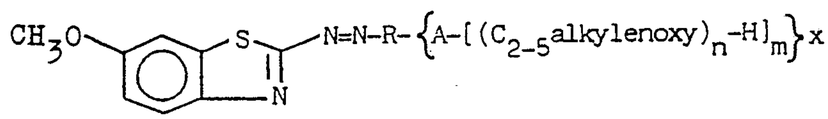

wherein R is $C_{6-24}$ arylene, e.g. meta-toluidene, meta-aminophenol, aniline or dimethoxyaniline; A is N, O, S or $CO_2$; n is an integer of from 2 to 300; m is 1 when A is O, S or $CO_2$, and 2 when A is N; x is an integer of from 1 to 5; and the product n.m.x. is from 2 to 400.

According to the present invention, a location process comprises applying to a land area a substance incorporating an alkyleneoxy-substituted fugitive colourant. It has been found that the process of the present invention may overcome the difficulties, described above, associated with known processes involving, for instance, the use of substances containing permanent dyes. Thus, it may now be possible to identify locations to which substances have been applied without causing, for example, permanent staining of workers' clothes and hands. It may further be possible to provide a process involving the use of a composition wherein the colourant component is compatible with the components of the composition to be applied, non-toxic, biodegradeable and therefore non-harmful to the environment. In addition, the process may make it possible to achieve identification by colouration of locatiions to which a substance has been applied in such a way that the colour can be shaded to match the aesthetics of the surrounding environment. This result may be especially desirable where the location to be treated is a turf grass such as that used in lawns, golf courses or athletic fields.

The land area to which the fugitive colourant is applied in the process according to the invention is, for example, agricultural land such as grazing, arable or crop land, turf-covered land such as lawns, golf courses or athletic fields, and other land areas such as forests, highways and utility rights-of-way. Other

possible locations for application are man-made surfaces, e.g. building surfaces such as foundations, paved highways and parking lots.

Substances which may be applied to a location according to the process of the present invention include a wide variety of liquid phase and/or solid phase substanes which may achieve a desired effect when applied to the location. In general, the substance may be characterised as one which, without incorporation of the colourant, does not cause any substantial change in appearance immediately on application to the location. Suitable substances for use in the present invention include, for instance, chemical compositions, especially agricultural chemicals in the solid and/or liquid phase, e.g. pesticide compositions such as fungicides, herbicides and insecticides, and fertilisers in the solid and/or liquid phase. Examples of suitable substances not typically considered to be agricultural chemicals include sand and also salt mixtures which are to be applied to roads and pavements, to alleviate hazardous conditions in snow and ice-covered areas. The amount of substance applied will be that conventionally applied to achieve the desired effect.

Any of a wide variety of alkyleneoxy-substituted fugitive colourants may be suitable for use in the present invention. Particular examples of suitable such colourants are those disclosed in US—A—3157663, US—A—3927044, US—A—4167510 and EP—A—0072621; all these publications are described above. Preferred colourants for use in the present invention have the formula

$$R\{A[(C_{2-4}\text{ alkyleneoxy constituent})_nR_1]_m\}_x$$

wherein R is an organic dyestuff molecule; A is a linking group selected from N, O, S and $CO_2$; n is an integer of from 2 to 300; m is 1 when A is O, S, or $CO_2$ and 2 when A is N; x is an integer of from 1 to 5; the product n.m.x. is from 2 to 300; and $R_1$ is OH, $NH_2$, $COR_2$ or $PO(OR_3)(OR_4)$, or a sulphonate or sulphate thereof, in which $R_2$ is H, OH, $C_{1-20}$ alkyl or ($C_{1-20}$ alkyl)carbonyl, and $R_3$ and $R_4$ are independently selected from H, $C_{1-20}$ alkyl, an alkali metal, an alkaline earth metal and ammonium.

Preparation of alkyleneoxy-substituted fugitive colourants is quite conventional. A wide variety of preparation procedures is generally described and exemplified in the given patent specifications. In general, the colourants may be prepared by converting a dyestuff intermediate into a corresponding alkylene oxide-containing compound, capping the alkylene oxide-containing compound (if desired), and reacting the resulting alkylene oxide-containing intermediate with a compound having a chromophoric group in the molecule, to produce the desired fugitive tint composition. The method of producing the dyesuff intermediate containing the alkylene oxide constituent can be such as disclosed in US—A—3157633 or US—A—3297044.

The colourants used in the invention are preferably water-soluble and/or water-fugitive, by which is meant substantially soluble in water and removable from a location to which the substance containing the colourant has been applied, by washing with water. "Washing" may include the effect of, say, rain or snow.

The colourant may be water and organic solvent-soluble and/or fugitive, i.e. it is substantially soluble in water or an organic solvent, and can be removed by washing the applied location with water or an organic solvent. Organic solvents which may be appropriate are well-known, and include hydrocarbons such as mineral oils, perchloroethylene and carbon tetrachloride.

The amount of alkyleneoxy-substituted fugitive colourant which is employed, i.e. the amount provided in association with the particular substance, will vary greatly depending upon the quantity of substance to be applied to a given area, the nature of the substance itself, the location to which the substance is to be applied, and possibly other factors. In general, the colourant will be employed in association with the substance in an amount sufficient to allow identification of the area to which the substance has been applied. The colourant may of course be employed in larger concentrations, for instance, in those applications where temporary colouration is appropriate or desirable. In general, upper limits on the amount of colourant may be determined, not by any performance disadvantages but rather by cost considerations. The actual amount of colourant employed may be, for example, at least 8, preferably at least 80, g per $m^2$ of location area to which the substance is to be applied.

The area to which the modified substance is applied, according to the invention, may be at least 10, preferably at least 100 and more preferably at least 1000, $m^2$. The area will usually be substantially flat, i.e. it will at least be visible from one viewpoint, and the height/depth of any contours will be small relative to the length/breadth of the area.

The following Preparations illustrate how materials for use in the invention, and precursors thereof, may be prepared. The subsequent Examples illustrate the location process of the invention.

### Preparation 1

181 g (1 mole) N,N-di(hydroxyethyl)aniline were heated to 140°C, under nitrogen, in a flask equipped with stirrer, thermometer, gas inlet tube near the bottom and a gas outlet near the top of the flask. About 200 mg sodium were added, as catalyst. Ethylene oxide was bubbled into the molten, vigorously stirred material at a rate such that a slight amount of gas escaped from the outlet tube. The ethylene oxide addition was continued, with cooling, to maintain the temperature at 140—160°C, until about 18 moles (792.9 g) of ethylene oxide had reacted. The product was N,N-di(hydroxyethylpolyethyleneoxy)aniline containing a total of about 20 ethyleneoxy groups.

Preparation 2

102.2 g (0.523 mole) N,N-dihydroxyethyl-*m*-toluidine was placed in a flask equipped with a stirrer, thermometer, and gas inlet and outlet tubes. The air in the flask was replaced by nitrogen, and the material was heated to about 140°C. About 200 mg sodium were added, as catalyst. Ethylene oxide was then bubbled into the molten, vigorously stirred material at a rate such that a slight amount of gas escaped from the outlet tube, and until the reaction mixture had increased in weight to about 540 g. About 18 molar equivalents of ethylene oxide had then been added to the starting material, to produce the compound

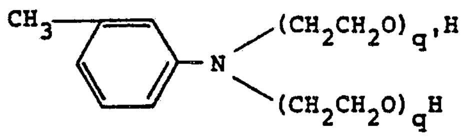

wherein q and q′ are each about 10.

Preparation 3

30 g (0.111 mole) aniline-2,5-disulphonic acid were dissolved in 70 g water, and cooled to 5—10°C. Sodium nitrite solution, produced by dissolving 9 g (0.13 mole) sodium nitrite in 50 g water, was added slowly. A pH of 2.5 or below was maintained, using hydrochloric acid, during the sodium nitrite addition. 124 g (0.128 moles) of the product of Preparation 1 were then added slowly. After all the diazonium salt had reacted (about 2 hours), the solution was made slightly alkaline with sodium hydroxide and sodium bicarbonate. A solution of a yellow colourant was obtained.

Preparation 4

A mixture of 500 g (0.534 mole) of the polyethyleneoxy compound of Preparation 1, 50 g (0.240 mole) O-formylbenzenesulphonic acid mono-sodium salt, 50 g hydrochloric acid and 10 g urea was refluxed at 110—120°C for 6 hours. A mixture of 52 g (0.535 mole) hydrogen peroxide and 52 g of water was added in one portion to the reaction mixture at 100—105°C, and the mixture was stirred for an additional 30 minutes. The mixture was brought to neutral pH with sodium hydroxide and sodium bicarbonate. A solution of a blue colourant was obtained.

Preparation 5

11.3 g (0.035 mole) 1,8-naphtholamine-3,6-disulphonic acid were added to a solution of 80 g water and 7 g hydrochloric acid, at 8—10°C. 2.4 g (0.035 mole) sodium nitrite were dissolved in 15 g water and slowly added to the solution of acids, while the pH was maintained below 3.0. The diazonium salt of 1,8-naphtholamine-3,6-disulphonic acid was formed.

Separately, 35 g (0.038 mole) of the product of Preparation 2 were mixed with 40 g water and cooled to 5—10°C. The pH of the mixture was lowered to 3.0 with hydrochloric acid.

The diazonium salt was added to the separate mixture. A solution of sodium acetate and water was added at a rate sufficient to maintain a pH of 3.8, until all the diazo salt had reacted. The mixture was brought to neutral pH with sodium hydroxide and sodium bicarbonate. A solution of a red colourant was obtained.

Example 1

9.07 kg of 2.4D Amine (a broadleaf weed control herbicide available from Gordon Corporation and sold under the trade mark Trimec) and 1.59 kg of the blue colourant of Preparation 4 were mixed in 367.4 litres water. This mixture was sprayed, using a Broyhill Spray applicator, at the rate of 1000—2000 l/ha, on an area of turf-covered land. The pattern of application of the herbicide to the land was readily discernible; not only could any possible unwanted overspray or misplaced application be avoided, but also overlapping was avoided. Uniform application was achieved.

Example 2

7.57 litres of Round-Up (a non-selective herbicide available from Monsanto) and 1.59 kg of the colourant of Preparation 4 were mixed with 369.3 litres water. The admixture was sprayed onto foliage, using a pressurised sprayer, at the rate of 935 l/ha. The pattern of spray application was readily observable, overlapping and misplaced application were avoided, and there were substantially no untreated areas (where treatment was intended).

Example 3

3.79 litres of Termide (a mixture of Chlordane and Heptachlor available from Forshaw Chemical Co) and 227 g of the colourant of Preparation 4 were mixed with 374.5 litres water. This formulation was applied to a cement building foundation, using a pressurised spray applicator, as a pre-treatment for termites. Uniform application, with little or no overlapping and missed areas, was achieved simply, to give visible and satisfactory saturation coverage.

**Claims**

1. A location process, which comprises applying to a land area a substance incorporating an alkyleneoxy-substituted fugitive colourant.
2. A process according to claim 1, in which the substance is a liquid.
3. A process according to claim 1 or claim 2, in which the substance is a pesticide composition.
4. A process according to claim 1 or 2, in which the substance is a fertiliser.
5. A process according to any preceding claim, in which the fugitive colourant is water-fugitive.
6. A process according to any preceding claim, in which the fugitive colourant has the formula

$$R\{A[(C_{2-4} \text{ alkyleneoxy constituent})_n R_1]_m\}_x$$

wherein R is an organic dyestuff molecule; A is a linking group selected from N, O, S and $CO_2$; n is an integer of from 2 to 300; m is 1 when A is O, S, or $CO_2$ and 2 when A is N; x is an integer of from 1 to 5; the product n.m.x. is from 2 to 300; and $R_1$ is OH, $NH_2$, $COR_2$ or $PO(OR_3)(OR_4)$, or a sulphonate or sulphate thereof, in which $R_2$ is H, OH, $C_{1-20}$ alkyl or ($C_{1-20}$ alkyl)carbonyl, and $R_3$ and $R_4$ are independently selected from H, $C_{1-20}$ alkyl, an alkali metal, an alkaline earth metal and ammonium.
7. A process according to any of claims 1 to 5, in which the fugitive colourant has the formula

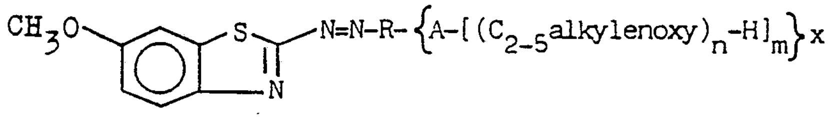

wherein R is meta-toluidene, meta-aminophenol, aniline or dimethoxyaniline; A is N, O, S, or $CO_2$; n is an integer of from 2 to 300; m is 1 when A is O, S or $CO_2$ and 2 when A is N; x is an integer of from 1 to 5; and the product n.m.x. is from 2 to 400.
8. A process according to any preceding claim, in which the land area is at least 10 $m^2$.

**Patentansprüche**

1. Lokalisierungsverfahren, welches ein Aufbringen einer einen Alkylenoxy-substituierten unechten Farbstoff enthaltenden Substanz auf eine Bodenfläche umfaßt.
2. Verfahren nach Anspruch 1, worin die Substanz eine Flüssigkeit ist.
3. Verfahren nach Anspruch 1 oder 2, worin die Substanz eine Pestizidzusammensetzung ist.
4. Verfahren nach Anspruch 1 oder 2, worin die Substanz ein Düngemittel ist.
5. Verfahren nach einem der vorstehenden Ansprüche, worin der unechte Farbstoff wasserunbeständig ist.
6. Verfahren nach einem der vorstehenden Ansprüche, worin der unechte Farbstoff die Formel

$$R\{A[(C_{2-5}\text{Alkylenyoxy-Bestandteil})_n R_1]_m\}_x$$

aufweist, worin R ein organisches Farbstoffmolekül darstellt; A eine unter N, O, S, und $CO_2$ ausgewählt Verbindungsgruppe bedeutet; n eine ganze Zahl von 2 bis 300 ist; m den Wert 1 hat, wenn A für O, S oder $CO_2$ steht, und den Wert 2 aufweist, wenn A für N steht; x eine ganze Zahl von 1 bis 5 ist; das Produkt aus n.m.x. von 2 bis 300 beträgt; und $R_1$ für OH, $NH_2$, $COR_2$ oder $PO(OR_3)(OR_4)$ oder ein Sulfonat oder Sulfat hievon steht, worin $R_2$ für H, OH, $C_{1-20}$Alkyl oder ($C_{1-20}$Alkyl)carbonyl steht und $R_3$ und $R_4$ unabhängig voneinander ausgewählt sind under H, $C_{1-20}$Alkyl, einem Alkalimetall, einem Erdalkalimetall und Ammonium.
7. Verfahren nach einem der Ansprüche 1 bis 5, worin der unechte Farbstoff die Formel

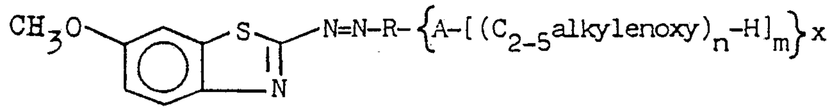

hat, worin R für meta-Toluidin, meta-Aminophenol, Anilin oder Dimethoxyanilin steht; A für N, O, S oder $CO_2$ steht; n für eine ganze Zahl von 2 bis 300 bedeutet; m den Wert 1 hat, wenn A für O, S oder $CO_2$ steht, und den Wert 2 hat, wenn A für N steht; x eine ganze Zahl von 1 bis 5 ist; und das Produkt aus n.m.x. von 2 bis 400 beträgt.
8. Verfahren nach einem der vorstehenden Ansprüche, worin die Bodenfläche wenigstens 10 $m^2$ beträgt.

**Revendications**

1. Un procédé de localisation qui comprend l'application à la surface d'un terrain d'une substance incorporant un colorant fugitif à substitution alkylèneoxy.

2. Un procédé selon la revendication 1, selon laquelle la substance est un liquide.

3. Un procédé selon la revendication 1 ou 2, selon laquelle la substance est une composition pesticide.

4. Un procédé selon la revendication 1 ou 2, selon laquelle la substance est un engrais.

5. Un procédé selon l'une quelconque des revendications précédentes selon laquelle le colorant fugitif est fugitif vis-à-vis de l'eau.

6. Un procédé selon l'une des revendications précédentes, selon laquelle le colorant fugitif a la formule:

$$R\{A[(\text{constituant alkylèneoxy en } C_{2-5})_nR_1]_m\}_x$$

dans laquelle R est une molécule de colorant organique; A est un groupe de liaison choisi parmi N, O, S et $CO_2$; n est un nombre entier de 2 à 300; m est 1 lorsque A est O, S ou $CO_2$ et m est 2 lorsque A est N; x est un nombre entier de 1 à 5; le produit n.m.x. est de 2 à 300; et $R_1$ est OH, $NH_2$, $COR_2$ ou $PO(OR_3)(OR_4)$, ou un sulfonate ou sulfate de ceci, dans lequel $R_2$ est H, OH, un groupe alkyle en $C_1$—$C_{20}$ ou un groupe (alkyl en $C_1$—$C_{20}$) carbonyle et $R_3$ et $R_4$ sont choisis indépendamment dans le groupe comprenant H, un groupe alkyle en $C_1$—$C_{20}$, un métal alcalin, un métal alkalinoterreux et l'ammonium.

7. Un procédé selon l'une quelconque des revendications 1 à 5, selon laquelle le colorant fugitif a la formule suivante:

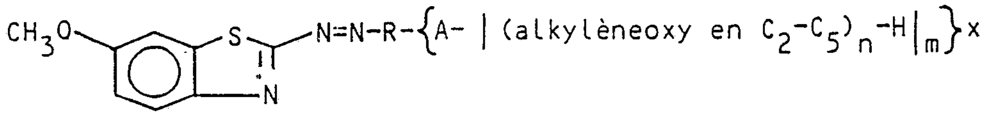

dans laquelle R désigne le méta-toluidène, le méta-aminophénol, l'aniline ou la diméthoxyaniline; A est N, O, S ou $CO_2$; n est un nombre entier de 2 à 300; m est 1 lorsque A est O, S ou $CO_2$ et m est 2 lorsque A est N; x est un nombre entier de 1 à 5; et le produit n.m.x. est de 2 à 400.

8. Un procédé selon l'une quelconque des revendications précédentes selon laquelle la surface du terrain est d'au moins 10 $m^2$.